# FASCICULE DE BREVET EUROPEEN

(11) **EP 3 155 682 B1**
(45) Date de publication et mention de la délivrance du brevet: **09.05.2018**
(21) Numéro de dépôt: 15732847.7
(22) Date de dépôt: 09.06.2015
(51) Int. Cl.: H01M 8/02

(54) **STRUCTURE ET PROCEDE DE FABRICATION AMELIORES POUR UNE PLAQUE BIPOLAIRE DE PILE A COMBUSTIBLE**
VERBESSERTE STRUKTUR UND VERFAHREN ZUR HERSTELLUNG EINER BIPOLARPLATTE EINER BRENNSTOFFZELLE
IMPROVED STRUCTURE AND METHOD OF PRODUCTION FOR A BIPOLAR PLATE OF A FUEL CELL

(30) Priorité: 13.06.2014 FR 1455378
(43) Date de publication de la demande: 19.04.2017
(73) Titulaire: Safran Power Units, 31200 Toulouse (FR)
(72) Inventeur: LAVENU, Yoann, F-78520 Follainville (FR)
(74) Mandataire: Gilbey, Vincent
(86) Numéro de dépôt international: PCT/FR2015/051520
(87) Numéro de publication internationale: WO 2015/189514

(56) Documents cités:
- EP-A1- 1 826 851
- DE-U1-202010 010 972
- FR-A1- 2 996 361

## Description

### DOMAINE TECHNIQUE GENERAL

La présente invention concerne le domaine des piles à combustible, et vise plus particulièrement l'assemblage de plaques bipolaires de piles à combustibles.

### ETAT DE L'ART

L'optimisation de la masse des piles à combustible a conduit à améliorer la structure des plaques bipolaires en les formant à partir de deux demi-plaques embouties identiques afin de réaliser plusieurs fonctions ; la circulation des réactifs sur les faces externes, la circulation d'un fluide caloporteur entre les plaques, l'interconnexion électrique entre deux assemblages membrane électrode, et l'appui et le serrage de l'assemblage membrane électrode.
L'emboîtement des demi-plaques forme ainsi les conduits de refroidissement pour le passage du fluide caloporteur, assurant le refroidissement de la pile à combustible.

Ces conduits de refroidissement sont de part et d'autre des conduits pour la circulation des réactifs, et ont des dimensions très faibles de l'ordre de quelques dixièmes de millimètres, ce qui est très contraignant en termes de tolérances de réalisation et d'assemblage. Le document DE 20 2010 010 972 U1 décrit un ensemble pour la formation d'une plaque bipolaire de pile à combustible et un procédé de formation de demi-plaques, comprenant deux demi-plaques, et les demi-plaques comprennent chacune des éléments d'indexation. Les techniques actuelles d'assemblage des demi-plaques consistent à utiliser un pion de centrage déporté sur un outillage, ou un système d'équerres déportées sur un outillage.

Ces solutions sont cependant problématiques pour obtenir les tolérances souhaitées ; le positionnement utilisant un outillage entraine en effet deux jeux successifs, entre une première demi-plaque et l'outillage, puis entre l'outillage et une seconde demi-plaque, ce qui augmente la dispersion totale de l'assemblage.

La présente invention vise ainsi à remédier au moins partiellement à cette problématique.

### PRESENTATION DE L'INVENTION

A cet effet, la présente invention propose un ensemble pour la formation d'une plaque bipolaire de pile à combustible, comprenant deux demi-plaques adaptées pour être assemblées l'une contre l'autre, chacune des deux demi-plaques comprenant des rainures formées par emboutissage et s'étendant selon une direction longitudinale , et adaptées pour former des canaux de circulation de réactifs de part et d'autre des demi-plaques, et des conduits de circulation de fluide caloporteur entre les deux demi-plaques,
caractérisé en ce que les demi-plaques sont identiques, et comprennent chacune au moins une paire d'éléments d'indexation complémentaires réalisés par emboutissage, adaptés pour réaliser un centrage desdites demi-plaques l'une par rapport à l'autre lors de leur assemblage.

Les éléments d'indexation de chacune des demi-plaques sont typiquement réalisés par emboutissage, durant une même passe d'emboutissage que la formation des rainures.

Selon un mode de réalisation particulier, les rainures de chaque demi-plaque définissent l'épaisseur de la demi-plaque, et dans lequel les éléments d'indexation de chaque demi-plaque sont typiquement compris dans l'épaisseur de chaque demi-plaque.

Selon un mode de réalisation particulier, chacune des paires d'éléments d'indexation des demi-plaques comprend deux éléments d'indexation complémentaires disposés symétriquement par rapport à un axe médian de la demi-plaque considérée.

Chacune des demi-plaques comprend par exemple deux paires d'éléments d'indexation :
- une paire d'éléments d'indexation circulaires, formés d'une part d'un axe longitudinal médian de chaque demi-plaque, et
- une paire d'éléments d'indexation oblongs, formés d'autre part de l'axe longitudinal médian de chaque demi-plaque.

Les deux demi-plaques sont avantageusement réalisées dans un même lot d'emboutissage par hydroformage.

L'invention concerne également une plaque bipolaire de pile à combustible formée d'un ensemble selon l'un des modes de réalisations décrits ci-dessus, les deux demi-plaques dudit ensemble étant assemblées après rotation de l'une desdites demi-plaques de 180° autour d'un axe médian de la demi-plaque.

L'invention concerne également un procédé de formation de demi-plaques adaptées pour être assemblées l'une contre l'autre de manière à former une plaque bipolaire de pile à combustible, dans lequel on forme deux demi-plaques identiques par emboutissage, de manière à ce qu'elles présentent chacune des rainures s'étendant selon une direction longitudinale adaptées pour former des canaux de circulation de réactifs de part et d'autre des demi-plaques, et des conduits de circulation de fluide caloporteur entre les deux demi-plaques, et au moins une paire d'éléments d'indexation complémentaires adaptés pour réaliser un centrage desdites demi-plaques l'une par rapport à l'autre lors de leur assemblage.

Les rainures et les éléments d'indexation de chacune des demi-plaques sont typiquement réalisés lors d'une même passe d'emboutissage. Selon un mode de réalisation particulier, l'emboutissage pour former les rainures définit une épaisseur de chaque demi-plaque, et dans lequel les éléments d'indexation de chaque demi-plaque sont typiquement compris dans l'épaisseur de chaque demi-plaque.

Selon un mode de réalisation particulier, pour chacune des demi-plaques, on forme par emboutissage une paire d'éléments d'indexation circulaires, formés d'une part d'un axe longitudinal médian de chaque demi-plaque, et une paire d'éléments d'indexation oblongs, formés d'autre part de l'axe longitudinal médian de chaque demi-plaque.

Les deux demi-plaques sont avantageusement réalisées dans un même lot d'emboutissage par hydroformage.

La présente invention propose également un procédé d'assemblage d'une plaque bipolaire de pile à combustible, comprenant les étapes suivantes :
- on se munit d'un ensemble selon l'un des modes de réalisation décrits ci-dessus,
- on effectue une rotation de 180° de l'une des demi-plaques autour de l'axe médian de la demi-plaque considérée,
- on superpose les deux demi-plaques l'une sur l'autre, de manière à ce que leurs paires d'éléments d'indexation complémentaires s'engagent et réalisent ainsi un centrage desdites deux demi-plaques l'une par rapport à l'autre.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- La figure 1 présente une vue d'une demi-plaque d'un ensemble selon un aspect de l'invention,
- La figure 2 présente une vue partielle en coupe d'un ensemble selon un aspect de l'invention,
- Les figures 3, 4 et 5 illustrent l'assemblage d'un ensemble selon un aspect de l'invention pour la formation d'une plaque bipolaire de pile à combustible, les figures 3A et 4A étant des vues en élévation de deux demi-plaques avant et après l'assemblage, les figures 3B et 4B étant des vues des détails B sur les figures 3A et 4A, et la figure 5 étant une vue en perspective de deux demi-plaques avant l'assemblage.
- La figure 6 présente une vue en perspective d'une demi-plaque d'un ensemble selon un autre aspect de l'invention.

Sur l'ensemble des figures, les éléments en commun sont repérés par des références numériques identiques.

### DESCRIPTION DETAILLEE

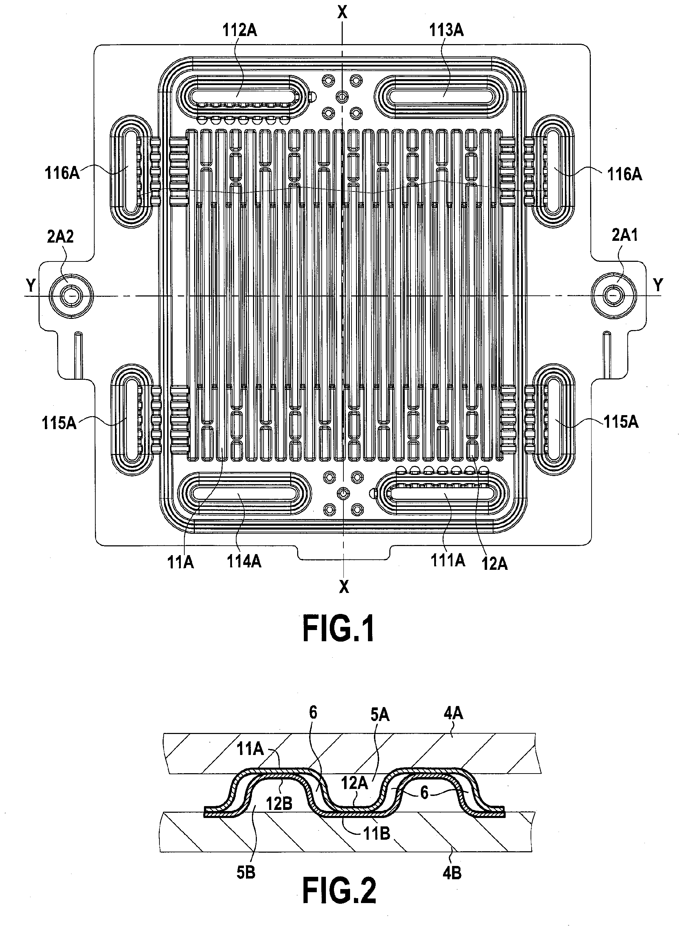

La figure 1 présente une vue d'une demi-plaque d'un ensemble selon un aspect de l'invention.
On représente sur cette figure une première demi-plaque 1A, adaptée pour être assemblée à une seconde demi-plaque identique 1B (non représentée sur cette figure) pour former une plaque bipolaire de pile à combustible.
On décrit ci-après la demi-plaque 1A, la demi-plaque 1B étant identique, et ses éléments étant désignés par les mêmes références numériques que celles de la demi-plaque 1A mais se terminant par la lettre B.

La première demi-plaque 1A est formée à partir d'un flan issu d'une tôle, embouti selon un relief crénelé en section transversale (selon la direction transversale parallèle à l'axe Y-Y) comme présenté sur la figure 1, chaque créneau délimitant un canal.

Chaque créneau présente par exemple la forme d'un trapèze dont une des bases est ouverte ce qui forme un U avec les branches évasées en direction de l'ouverture. On repère deux types de créneaux qui sont alternés, les créneaux longs 11A et les créneaux courts 12A, les dénominations « long » et « courts » étant arbitraires et symbolisant que ces créneaux ont des largeurs distinctes, la largeur étant mesurée selon l'axe Y-Y.

Les deux demi-plaques 1A et 1B sont identiques et montées dos à dos après avoir fait pivoter de 180° l'une des demi-plaques autour de son axe longitudinal médian X-X, de manière à engager un créneau long 11A ou 11B d'une des demi-plaques 1A ou 1B dans un créneau court 12A ou 12B de l'autre demi-plaque 1B ou 1A.

La figure 2 présente une vue en coupe de cet engagement des créneaux des demi-plaques 1A et 1B superposées, et disposées entre deux couches de diffusion 4A et 4B d'une pile à combustible. La première demi-plaque 1A est accolée à une première couche de diffusion 4A, et la seconde demi-plaque 1B est accolée à une seconde couche de diffusion 4B.
Comme on le voit sur cette figure, l'engagement des créneaux courts 12A et 12B dans les créneaux longs 11A et 11B forme des canaux de circulation des réactifs entre les créneaux courts et les couches de diffusion, ainsi que des canaux de refroidissement entre les deux demi-plaques 1A et 1B.
On définit ainsi des premiers canaux de réactifs 5A entre la première plaque 4A et la première couche de diffusion 4A, et des seconds canaux de réactifs 5B entre la seconde plaque 1B et la seconde couche de diffusion 4B.
La différence de largeur entre les créneaux longs 11A et 11B et les créneaux courts 12A et 12B entraine également la formation de conduits de refroidissement 6 entre les deux demi-plaques 1A et 1B.

En considérant que les créneaux ont une forme générale de trapèze avec une base ouverte, les demi-plaques étant identiques, les bases des créneaux sont en appui l'une contre l'autre. Les conduits de refroidissement 6 se forment ainsi entre les branches des créneaux longs 11A, 11B et courts 12A, 12B.

Les conduits de refroidissement 6 et les canaux de réactifs 5A et 5B sont reliés à des ouvertures pour l'alimentation et l'évacuation en fluide, aménagées en périphérie de chaque demi-plaque 1A et 1B.
En référence à la demi-plaque 1A, on illustre ainsi sur la figure 1 :
- une ouverture d'alimentation pour le premier réactif 111A,
- une ouverture d'évacuation pour le premier réactif 112A,
- une ouverture d'alimentation pour le second réactif 113A,
- une ouverture d'évacuation pour le second réactif 114A,
- deux ouvertures d'alimentation pour le fluide de refroidissement 115A ; reliées aux conduits de refroidissement 6, et
- deux ouvertures d'évacuation pour le fluide de refroidissement 116A, reliées aux conduits de refroidissement 6.

Les demi-plaques 1A et 1B permettent ainsi de réaliser des conduits et canaux de circulation des réactifs et d'un fluide de refroidissement pour une pile à combustible.
Afin d'assurer un positionnement précis des demi-plaques 1A et 1B l'une par rapport à l'autre, et par conséquent s'assurer de la bonne formation des conduits de refroidissement 6, des éléments d'indexation sont réalisés dans chacune des demi-plaques 1A et 1B, typiquement par emboutissage, et avantageusement lors d'une même passe d'emboutissage que les différents créneaux de chacune des demi-plaques 1A et 1B.

Dans le mode de réalisation représenté sur la figure 1, la demi-plaque 1A comprend une paire d'éléments d'indexation disposés sensiblement à deux extrémités de la demi-plaque 1A, selon un axe transversal médian Y-Y, et de part et d'autre d'un axe longitudinal médian X-X.

On définit ainsi pour la demi-plaque 1A un premier élément d'indexation 2A1 et un deuxième élément d'indexation 2A2.
La demi-plaque 1B est identique, et comprend ainsi un premier élément d'indexation 2B1 et un deuxième élément d'indexation 2B2.

Ces éléments d'indexation sont configurés de manière à ce que le premier élément d'indexation 2A1 puisse s'engager dans le deuxième élément d'indexation 2A2, et donc dans le deuxième élément d'indexation 2B2 de la demi-plaque 1B, cette dernière étant identique.

Afin de réaliser un tel engagement, on fait pivoter de 180° l'une des demi-plaques autour de son axe longitudinal médian X-X, et on la superpose ensuite sur l'autre des demi-plaques.

Ces éléments d'indexation sont formés par emboutissage, de manière à former un bossage central s'étendant d'une part de la demi-plaque 1A, entouré par un bossage périphérique s'étendant d'autre part de la demi-plaque 1A.

Les éléments d'indexation sont par exemple disposés symétriquement par rapport à un axe médian de la demi-plaque considérée, ici par rapport à l'axe X-X.

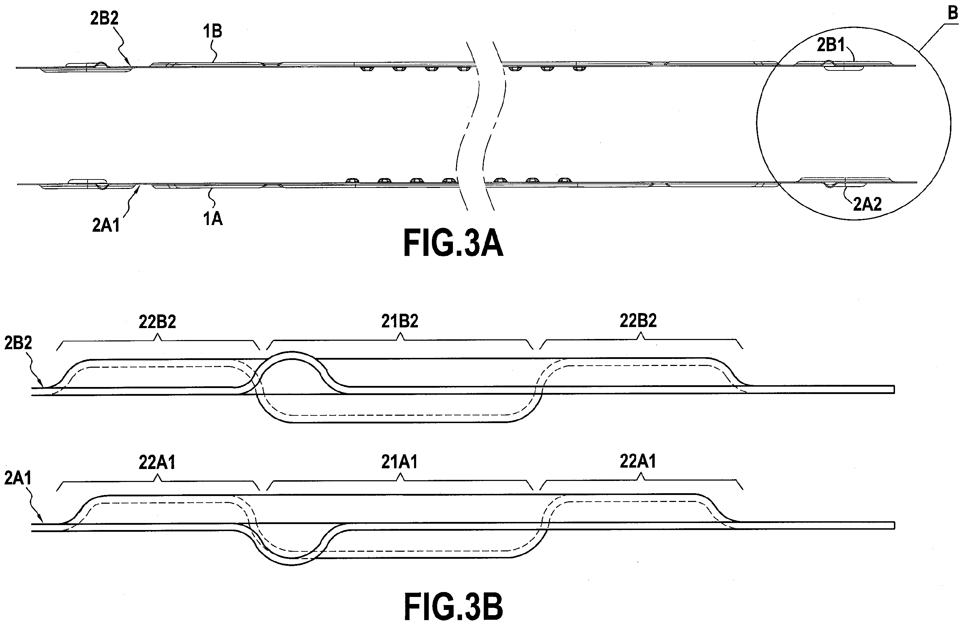

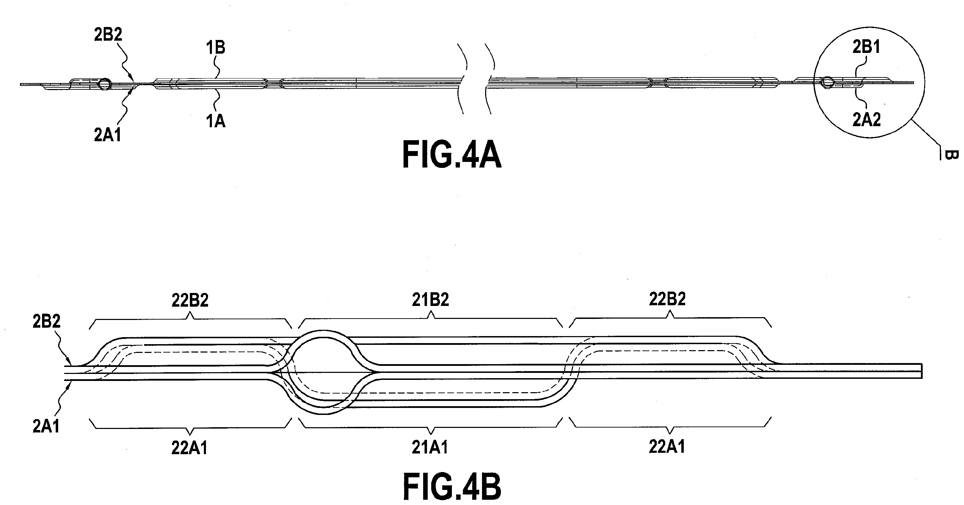

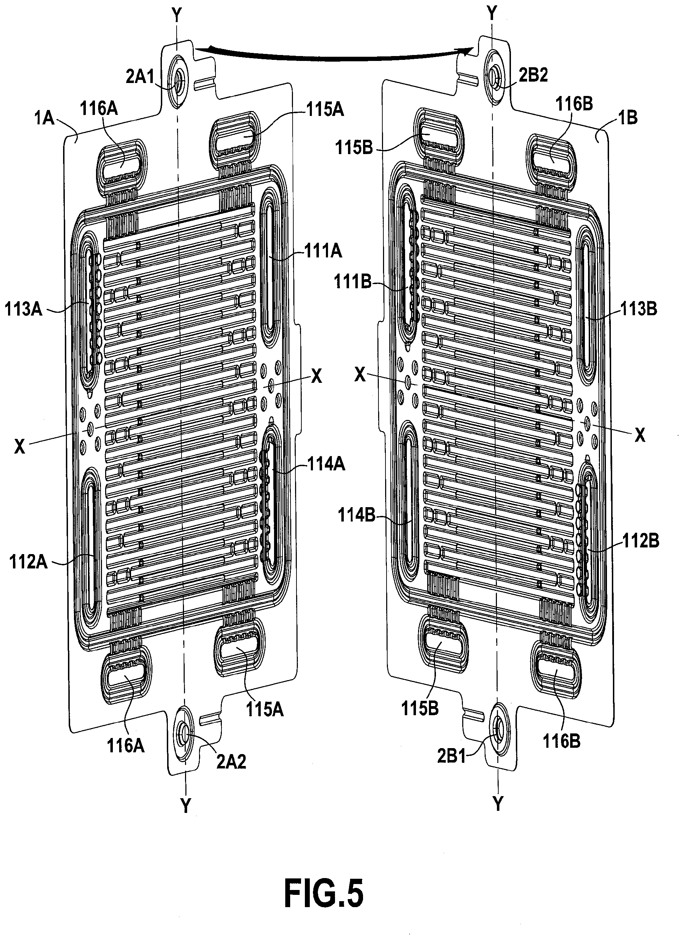

On représente sur les figures 3 à 5 l'engagement des deux demi-plaques 1A et 1B afin de former une plaque bipolaire.

Comme on le voit sur ces figures, en référence à la demi-plaque 1A, un bossage central 21A1 s'étend d'une part de la demi-plaque 1A, tandis qu'un bossage périphérique 22A1 s'étend d'autre part de la demi-plaque 1A, l'ensemble formant l'élément d'indexation 2A.

Un élément d'indexation 2B2 est formé sur la plaque 1B Cet élément d'indexation 2B2 comprend également un bossage central 21B2 qui s'étend d'une part de la demi-plaque 1B, tandis qu'un bossage périphérique 22B2 s'étend d'autre part de la demi-plaque 1B, l'ensemble formant l'élément d'indexation 2B2.

Les éléments d'indexation 2A1 et 2B2 sont complémentaires, c'est-à-dire qu'ils s'emboîtent lors de l'assemblage des demi-plaques 1A et 1B. Plus précisément, comme cela est représenté sur les figures, après que l'on a fait pivoter la demi-plaque 1A de 180° autour de son axe X-X et que celle-ci est superposée sur la demi-plaque 1B, le bossage central 21B2 vient coopérer avec le bossage central 21A1, et le bossage périphérique 22A1 vient coopérer avec le bossage périphérique 22B2.

Dans le mode de réalisation représenté sur la figure 1, les éléments d'indexation 2A1 et 2B2 sont circulaires ; ce qui réalise ainsi une indexation des deux demi-plaques 1A et 1B selon la direction X-X ainsi que selon la direction Y-Y.

Les éléments d'indexation 2A1 et 2A2 peuvent être disposés symétriquement par rapport à un axe médian de la demi-plaque 1A, ici par rapport à l'axe X-X.

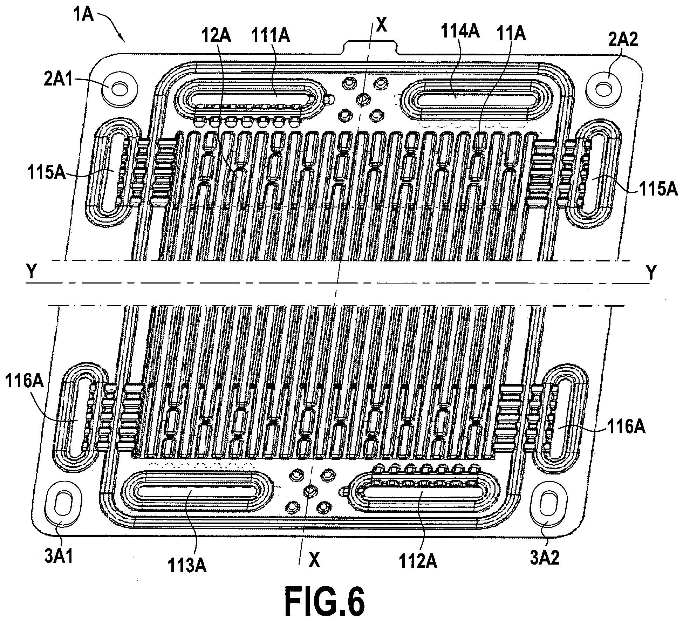

Dans le mode de réalisation représenté sur la figure 6, une autre paire d'éléments d'indexation 3A1 et 3A2 est aménagée sur la demi-plaque 1A. Les éléments d'indexation 3A1 et 3A2 peuvent être disposés symétriquement par rapport à un axe médian de la demi-plaque 1A, ici par rapport à l'axe X-X.
En outre, dans le mode de réalisation représenté, les éléments d'indexation 2A1 et 2A2 sont disposés d'une part de l'axe Y-Y, les éléments d'indexation 3A1 et 3A2 étant disposés d'autre part de l'axe Y-Y. Les éléments d'indexation 3A1 et 3A2 ont une structure similaire à celle des éléments d'indexation 2A1 et 2A2, et comprennent ainsi un bossage central s'étendant d'une part de la demi-plaque 1A, et un bossage périphérique s'étendant d'autre part de la demi-plaque 1A. Dans le mode de réalisation représenté, contrairement aux éléments d'indexation 2A1 et 2A2 qui sont circulaires, les éléments d'indexation 3A1 et 3A2 sont oblongs. Ils permettent ainsi de réaliser un rattrapage du centrage selon la direction Y-Y.
Un tel mode de réalisation associant des éléments d'indexation circulaires et des éléments d'indexation oblongs est particulièrement avantageux pour des demi-plaques ayant une longueur importante, le centrage est réalisé par les éléments d'indexation circulaires 2A1, 2A2, 2B1 et 2B2, tandis que la fonction de rattrapage de centrage réalisée par les éléments d'indexation oblongs 3A1, 3A2, 3B1 et 3B2 permet de compenser des écarts pouvant intervenir du fait d'une longueur trop importante.

Chacune des demi-plaques 1A et 1B comprend ainsi au moins une paire d'éléments d'indexation adaptés pour réaliser un centrage des demi-plaques 1A et 1B l'une par rapport à l'autre selon les directions définies par les axes X-X et Y-Y.

Le nombre d'éléments d'indexation peut varier en fonction des dimensions des demi-plaques.

Par exemple, dans le cas de demi-plaques de dimensions réduites, on peut se contenter de réaliser une paire d'éléments d'indexation sur chacune des demi-plaques, par exemple de part et d'autre de l'axe X-X, typiquement aux extrémités des demi-plaques selon l'axe Y-Y.

Les demi-plaques peuvent ainsi comporter chacune seulement une paire d'éléments d'indexation circulaires et complémentaires.

Dans le cas de demi-plaques de dimensions plus importantes, on peut réaliser sur chacune des demi-plaques une paire d'éléments d'indexation circulaires, et en outre une paire d'éléments d'indexation oblongs, afin de rattraper le centrage.

Par ailleurs, les deux demi-plaques 1A et 1B utilisées pour la formation d'une plaque bipolaire de pile à combustible sont avantageusement formées dans un même procédé, c'est-à-dire à partir d'un même lot et en utilisant les mêmes paramètres de mise en forme et un même outillage, ce qui permet d'éliminer la dispersion au niveau de l'entraxe entre les différents éléments d'indexation des demi-plaques.

Le centrage des demi-plaques 1A et 1B est donc réalisé par des paires d'éléments d'indexation appartenant aux demi-plaques 1A et 1B, et avantageusement formés lors de la mise en forme des différents créneaux formant les canaux et conduits de la plaque bipolaire.
Un tel centrage évite les dispersions résultant de l'utilisation d'outils de centrage distincts des demi-plaques, ce qui permet donc d'obtenir une précision améliorée.

Le procédé de mise en forme utilisé est typiquement l'emboutissage, par exemple par hydroformage.

Les créneaux réalisés dans chacune des demi-plaques 1A et 1B définissent typiquement l'épaisseur de chacune des demi-plaques 1A et 1B. Les éléments d'indexation de chacune des demi-plaques 1A et 1B sont typiquement avantageusement réalisés de manière à être compris dans l'épaisseur de la demi-plaque correspondante, ce qui permet de limiter l'encombrement total de l'ensemble.

La structure de demi-plaques présentée ainsi que le procédé de fabrication associé permettent ainsi de réaliser un centrage amélioré des demi-plaques pour la réalisation d'une plaque bipolaire de pile à combustible.

## Revendications

1. Ensemble pour la formation d'une plaque bipolaire de pile à combustible, comprenant deux demi-plaques (1A, 1B) adaptées pour être assemblées l'une contre l'autre, chacune des deux demi-plaques (1A, 1B) comprenant des rainures (11A, 12A, 11B, 12B) formées par emboutissage et s'étendant selon une direction longitudinale (X-X), et adaptées pour former des canaux de circulation de réactifs (5A, 5B) de part et d'autre des demi-plaques (1A, 1B), et des conduits de circulation de fluide caloporteur (6) entre les deux demi-plaques (1A, 1B), **caractérisé en ce que** les demi-plaques (1A, 1B) sont identiques, et comprennent chacune au moins une paire d'éléments d'indexation complémentaires (2A1, 2A2, 2B1, 2B2, 3A1, 3A2, 3B1, 3B2) formés par emboutissage, adaptés pour réaliser un centrage desdites demi-plaques (1A, 1B) l'une par rapport à l'autre lors de leur assemblage.

2. Ensemble selon la revendication 1, dans lequel les éléments d'indexation de chacune des demi-plaques (1A, 1B) sont réalisés par emboutissage, durant une même passe d'emboutissage que la formation des rainures (11A, 12A, 11B, 12B).

3. Ensemble selon l'une des revendications 1 ou 2, dans lequel les rainures (11A, 12A, 11B, 12B) de chaque demi-plaque (1A, 1B) définissent l'épaisseur de la demi-plaque (1A, 1B), et dans lequel les éléments d'indexation de chaque demi-plaque (1A, 1B) sont compris dans l'épaisseur de chaque demi-plaque (1A, 1B).

4. Ensemble selon l'une des revendications 1 à 3, dans lequel chacune des paires d'éléments d'indexation des demi-plaques (1A, 1B) comprend deux éléments d'indexation complémentaires disposés symétriquement par rapport à un axe médian de la demi-plaque considérée.

5. Ensemble selon l'une des revendications 1 à 3, dans lequel chacune des demi-plaques (1A, 1B) comprend deux paires d'éléments d'indexation :
- une paire d'éléments d'indexation circulaires (2A1, 2A2, 2B1, 2B2), formés d'une part d'un axe longitudinal médian (X-X) de chaque demi-plaque (1A, 1B), et
- une paire d'éléments d'indexation oblongs (3A1, 3A2, 3B1, 3B2), formés d'autre part de l'axe longitudinal médian (X-X) de chaque demi-plaque (1A, 1B).

6. Ensemble selon l'une des revendications 1 à 5, dans lequel les deux demi-plaques (1A, 1B) sont réalisées dans un même lot d'emboutissage par hydroformage.

7. Plaque bipolaire de pile à combustible, **caractérisée en ce qu'**elle est formée d'un ensemble selon l'une des revendications 1 à 6, les deux demi-plaques dudit ensemble étant assemblées après rotation de l'une desdites demi-plaques de 180° autour d'un axe médian (X-X) de la demi-plaque.

8. Procédé de formation de demi-plaques (1A, 1B) adaptées pour être assemblées l'une contre l'autre de manière à former une plaque bipolaire de pile à combustible, dans lequel on forme deux demi-plaques identiques (1A, 1B) par emboutissage, de manière à ce qu'elles présentent chacune des rainures (11A, 12A, 11B, 12B) s'étendant selon une direction longitudinale (X-X) adaptées pour former des canaux de circulation de réactifs (5A, 5B) de part et d'autre des demi-plaques (1A, 1B), et des conduits de circulation de fluide caloporteur (6) entre les deux demi-plaques (1A, 1B), et au moins une paire d'éléments d'indexation (2A1, 2A2, 2B1, 2B2, 3A1, 3A2, 3B1, 3B2) complémentaires adaptés pour réaliser un centrage desdites demi-plaques (1A, 1B) l'une par rapport à l'autre lors de leur assemblage.

9. Procédé selon la revendication 8, dans lequel les rainures (11A, 12A, 11B, 12B) et les éléments d'indexation de chacune des demi-plaques (1A, 1B) sont réalisés lors d'une même passe d'emboutissage.

10. Procédé selon l'une des revendications 8 ou 9, dans lequel l'emboutissage pour former les rainures (11A, 12A, 11B, 12B) définit une épaisseur de chaque demi-plaque (1A, 1B), et dans lequel les éléments d'indexation de chaque demi-plaque (1A, 1B) sont compris dans l'épaisseur de chaque demi-plaque (1A, 1B).

11. Procédé selon l'une des revendications 8 à 10, dans lequel pour chacune des demi-plaques (1A, 1B), on forme par emboutissage une paire d'éléments d'indexation circulaires (2A1, 2A2, 2B1, 2B2), formés d'une part d'un axe longitudinal médian (X-X) de chaque demi-plaque (1A, 1B), et une paire d'éléments d'indexation oblongs (3A1, 3A2, 3B1, 3B2), formés d'autre part de l'axe longitudinal médian (X-X) de chaque demi-plaque (1A, 1B).

12. Procédé selon l'une des revendications 8 à 11, dans lequel les deux demi-plaques (1A, 1B) sont réalisées dans un même lot d'emboutissage par hydroformage.

13. Procédé d'assemblage d'une plaque bipolaire de pile à combustible, comprenant les étapes suivantes :
- on se munit d'un ensemble tel que défini selon l'une des revendications 1 à 6,
- on effectue une rotation de 180° de l'une des demi-plaques (1A, 1B) autour de l'axe médian de la demi-plaque considérée,
- on superpose les deux demi-plaques (1A, 1B) l'une sur l'autre, de manière à ce que leurs paires d'éléments d'indexation complémentaires s'engagent et réalisent ainsi un centrage desdites deux demi-plaques (1A, 1B) l'une par rapport à l'autre.

## Patentansprüche

1. Anordnung zur Bildung einer Bipolarplatte einer Brennstoffzelle, umfassend zwei Halbplatten (1A, 1B), die miteinander verbindbar sind, wobei jede der beiden Halbplatten (1A, 1B) Nuten (11A, 12A, 11B, 12B) aufweist, die durch Tiefziehen gebildet sind und sich in eine Längsrichtung (X-X) erstrecken, und die dazu ausgelegt sind, Reagenz-Zirkulationskanäle (5A, 5B) auf beiden Seiten der Halbplatten (1A, 1B) und Wärmeträgerfluid-Zirkulationskanäle (6) zwischen den beiden Halbplatten (1A, 1B) zu bilden,
**dadurch gekennzeichnet, dass** die Halbplatten (1A, 1B) identisch sind und jeweils mindestens ein Paar komplementärer Indexelemente (2A1, 2A2, 2B1, 2B2, 3A1, 3A2, 3B1, 3B2) umfassen, die durch Tiefziehen gebildet und dazu ausgelegt sind, eine Zentrierung der Halbplatten (1A, 1B) untereinander während ihrer Montage vorzunehmen.

2. Anordnung gemäß Anspruch 1, wobei die Indexelemente jeder der Halbplatten (1A, 1B) durch Tiefziehen während desselben Tiefziehvorgangs wie die Ausbildung der Nuten (11A, 12A, 11B, 12B) gebildet werden.

3. Anordnung gemäß einem der Ansprüche 1 oder 2, wobei die Nuten (11A, 12A, 11B, 12B) jeder Halbplatte (1A, 1B) die Dicke der Halbplatte (1A, 1B) definieren, und wobei die Indexelemente jeder Halbplatte (1A, 1B) in die Dicke jeder Halbplatte (1A, 1B) eingeschlossen sind.

4. Anordnung gemäß einem der Ansprüche 1 bis 3, wobei jedes Paar von Indexelementen der Halbplatten (1A, 1B) zwei komplementäre Indexelemente umfasst, die symmetrisch in Bezug auf eine Mittelachse der betreffenden Halbplatte angeordnet sind.

5. Anordnung gemäß einem der Ansprüche 1 bis 3, wobei jede der Halbplatten (1A, 1B) zwei Paare von Indexelementen umfasst:
- ein Paar von kreisförmigen Indexelementen (2A1, 2A2, 2B1, 2B2), die auf der einen Seite einer mittleren Längsachse (X-X) jeder Halbplatte (1A, 1B) gebildet sind, und
- ein Paar länglicher Indexelemente (3A1, 3A2, 3B1, 3B2), die auf der anderen Seite der mittleren Längsachse (X-X) jeder Halbplatte (1A, 1B) gebildet sind.

6. Anordnung gemäß einem der Ansprüche 1 bis 5, wobei die beiden Halbplatten (1A, 1B) in ein und derselben Tiefziehcharge durch Innenhochdruckumformen hergestellt werden.

7. Bipolarplatte einer Brennstoffzelle, **dadurch gekennzeichnet, dass** sie aus einer Anordnung gemäß einem der Ansprüche 1 bis 6 gebildet ist, wobei die beiden Halbplatten der Anordnung zusammengefügt werden, nachdem eine der Halbplatten 180° um eine Mittelachse (X-X) der Halbplatte gedreht wurde.

8. Verfahren zur Herstellung von Halbplatten (1A, 1B), die miteinander verbunden werden können, um eine Bipolarplatte einer Brennstoffzelle zu bilden, wobei zwei identische Halbplatten (1A, 1B) durch Tiefziehen gebildet werden, sodass jede von ihnen Nuten (11A, 12A, 11B, 12B), die sich in einer Längsrichtung (X-X) erstrecken und dazu ausgelegt sind, Reagenz-Zirkulationskanäle (5A, 5B) auf beiden Seiten der Halbplatten (1A, 1B) und Wärmeträger-Zirkulationskanäle (6) zwischen den beiden Halbplatten (1A, 1B) zu bilden, und mindestens ein Paar von komplementären Indexelementen (2A1, 2A2, 2B1, 2B2, 3A1, 3A2, 3B1, 3B2) aufweist, die zum Zentrieren der Halbplatten (1A, 1B) untereinander während der Montage ausgelegt sind.

9. Verfahren gemäß Anspruch 8, wobei die Nuten (11A, 12A, 11B, 12B) und Indexelemente jeder der Halbplatten (1A, 1B) während desselben Tiefziehvorgangs gebildet werden.

10. Verfahren gemäß einem der Ansprüche 8 oder 9, wobei das Tiefziehen zur Bildung der Nuten (11A, 12A, 11B, 12B) eine Dicke jeder Halbplatte (1A, 1B) definiert, und wobei die Indexelemente jeder Halbplatte (1A, 1B) in die Dicke jeder Halbplatte (1A, 1B) eingeschlossen sind.

11. Verfahren gemäß einem der Ansprüche 8 bis 10, wobei für jede der Halbplatten (1A, 1B) durch Tiefziehen ein Paar von kreisförmigen Indexelementen (2A1, 2A2, 2B1, 2B2) auf der einen Seite einer mittleren Längsachse (X-X) jeder Halbplatte (1A, 1B) gebildet sind und ein Paar länglicher Indexelemente (3A1, 3A2, 3B1, 3B2) auf der anderen Seite der mittleren Längsachse (X-X) jeder Halbplatte (1A, 1B) gebildet sind.

12. Verfahren gemäß einem der Ansprüche 8 bis 11, wobei die beiden Halbplatten (1A, 1B) in ein und derselben Tiefziehcharge durch Innenhochdruckumformen hergestellt werden.

13. Verfahren zur Montage einer Bipolarplatte einer Brennstoffzelle, umfassend die folgenden Schritte:
- Bereitstellen einer Anordnung wie gemäß einem der Ansprüche 1 bis 6 definiert,
- Drehen einer der Halbplatten (1A, 1B) um 180° um die Mittelachse der betreffenden Halbplatte,
- Übereinanderlegen der beiden Halbplatten (1A, 1B) derart, dass ihre Paare komplementärer Indexelemente ineinander greifen und so eine Zentrierung der beiden Halbplatten (1A, 1B) untereinander bewirken.

## Claims

1. A kit for forming a bipolar plate of a fuel cell, the kit comprising two half-plates (1A, 1B) adapted to be assembled one against the other, each of the two half-plates (1A, 1B) having grooves (11A, 12A, 11B, 12B) formed by embossing and extending in a longitudinal direction (X-X), and being adapted to form reagent flow channels (5A, 5B) on either side of the half-plates (1A, 1B), together with heat transfer fluid flow ducts (6) between the two half-plates (1A, 1B), the kit being **characterized in that** the half-plates (1A, 1B) are identical, each having at least one pair of complementary indexing elements (2A1, 2A2, 2B1, 2B2, 3A1, 3A2, 3B1, 3B2) formed by embossing and adapted to center said half-plates (1A, 1B) relative to each other when they are assembled together.

2. A kit according to claim 1, wherein the indexing elements of each of the half-plates (1A, 1B) are made by embossing during the same embossing pass as is used for forming the grooves (11A, 12A, 11B, 12B).

3. A kit according to claim 1 or claim 2, wherein the grooves (11A, 12A, 11B, 12B) of each half-plate (1A, 1B) define the thickness of the half-plate (1A, 1B), and wherein the indexing elements of each half-plate (1A, 1B) lie within the thickness of each half-plate (1A, 1B).

4. A kit according to any one of claims 1 to 3, wherein each of the pairs of indexing elements of the half-plates (1A, 1B) comprises two complementary indexing elements arranged symmetrically relative to a middle axis of the half-plate under consideration.

5. A kit according to any one of claims 1 to 3, wherein each of the half-plates (1A, 1B) comprises two pairs of indexing elements:
• a pair of circular indexing elements (2A1, 2A2, 2B1, 2B2) formed on either side of a middle longitudinal axis (X-X) of each half-plate (1A, 1B); and
• a pair of oblong indexing elements (3A1, 3A2, 3B1, 3B2) formed on either side of the middle longitudinal axis (X-X) of each half-plate (1A, 1B).

6. A kit according to any one of claims 1 to 5, wherein the two half-plates (1A, 1B) are made from a single batch of embossing by hydroforming.

7. A bipolar fuel cell plate, **characterized in that** it is formed from a kit according to any one of claims 1 to 6, the two half-plates of said kit being assembled together after turning one of said half-plates through 180° about a middle axis (X-X) of the half-plate.

8. A method of forming half-plates (1A, 1B) suitable for being assembled one against the other so as to form a bipolar fuel cell plate, wherein two identical half-plates (1A, 1B) are formed by embossing so that each of them presents grooves (11A, 12A, 11B, 12B) extending in a longitudinal direction (X-X) and adapted to form reagent flow channels (5A, 5B) on either side of the half-plates (1A, 1B), together with heat transfer fluid flow ducts (6) between the two half-plates (1A, 1B), and also at least one pair of complementary indexing elements (2A1, 2A2, 2B1, 2B2, 3A1, 3A2, 3B1, 3B2) adapted to center said half-plates (1A, 1B) relative to each other while they are being assembled together.

9. A method according to claim 8, wherein the grooves (11A, 12A, 11B, 12B) and the indexing elements of each of the half-plates (1A, 1B) are made during the same embossing pass.

10. A method according to claim 8 or claim 9, wherein the embossing for forming the grooves (11A, 12A, 11B, 12B) defines a thickness for each half-plate (1A, 1B), and wherein the indexing elements of each half-plate (1A, 1B) are contained within the thickness of each half-plate (1A, 1B).

11. A method according to any one of claims 8 to 10, wherein, for each of the half-plates (1A, 1B), a pair of circular indexing elements (2A1, 2A2, 2B1, 2B2) are formed by embossing on either side of a middle longitudinal axis (X-X) of each half-plate (1A, 1B), and a pair of oblong indexing elements (3A1, 3A2, 3B1, 3B2) are formed by embossing on either side of the longitudinal middle axis (X-X) of each half-plate (1A, 1B) .

12. A method according to any one of claims 8 to 11, wherein both half-plates (1A, 1B) are made in a single batch of embossing by hydroforming.

13. A method of assembling a bipolar fuel cell plate, the method comprising the following steps:
• obtaining a kit as defined in any one of claims 1 to 6;
• turning one of the half-plates (1A, 1B) through 180° about the middle axis of the half-plate in question;
and
• superposing the two half-plates (1A, 1B) one on the other so that their complementary pairs of indexing elements engage, thereby centering said two half-plates (1A, 1B) relative to each other.
